# EUROPÄISCHE PATENTSCHRIFT

(11) **EP 2 565 470 B1**
(45) Veröffentlichungstag und Bekanntmachung des Hinweises auf die Patenterteilung: **22.06.2016**
(21) Anmeldenummer: 12181200.2
(22) Anmeldetag: 21.08.2012
(51) Int. Cl.: F16B 13/00, F16B 13/12

(54) **Dübel**
Dowel
Cheville

(30) Priorität: 29.08.2011 DE 102011081742
(43) Veröffentlichungstag der Anmeldung: 06.03.2013
(73) Patentinhaber: Adolf Würth GmbH & Co. KG, 74653 Künzelsau (DE); Würth International AG, 7004 Chur (CH)
(72) Erfinder: Wieland, Achim, 74211 Leingarten (DE)
(74) Vertreter: Patentanwälte Ruff, Wilhelm, Beier, Dauster & Partner mbB

(56) Entgegenhaltungen:
- EP-A1- 0 109 026
- DE-U- 6 907 152
- GB-A- 2 129 899
- US-A- 4 596 503

## Beschreibung

Die Erfindung geht aus von einem Dübel zur Befestigung von Rahmenelementen, beispielsweise Fensterrahmen, am Mauerwerk.

Dübel dieser Art werden in der Weise verwendet, dass sie durch eine durchgehende Bohrung des Rahmens hindurch in eine Bohrung im Mauerwerk eingesteckt und anschließend aufgespreizt werden.

Es ist bereits ein Dübel dieser Art bekannt, bei dem die Dübelhülse in einem Aufspreizbereich eine Vielzahl von Aufspreizelementen aufweist, die bei Aufspreizen der Dübelhülse nach außen bewegbar sind und zwischen denen eine Vielzahl von Rücksprungelementen angeordnet ist, die ebenfalls nach außen bewegbar sind (EP 1855016 A1).

Weiterhin bekannt ist ein Dübel, der in einer Dübelhülse eine Vielzahl von aufklappbaren dreieckigen Sperrelementen enthält, die um eine Achse quer zur Längsachse der Dübelhülse aufgeklappt werden können (DE 9110499 U1).

**Ebenfalls bekannt ist ein Dübel, der in seinem äußeren Endbereich als Dübelhülse mit um eine Achse quer zur Längsachse der Dübelhülse aufklappbaren Sperrelementen ausgebildet ist und in seinem inneren Endbereich zwei Spreizschenkel aufweist (**US 4,596,503**).**

**Bekannt ist außerdem ein Dübel, der durch Längsschlitze voneinander getrennte Schenkel mit Verriegelungsvorsprüngen an seinen Außenseiten aufweist (**DE 6907152 U1**).**

**Ein nochmals weiterer Dübel weist vier durch Längsschlitze voneinander getrennte Stege auf, von denen zwei einander gegenüberliegende Stege ihrerseits mit aufweitbaren Vorsprüngen an ihren Außenseiten versehen sind (**GB 2 129 899 A**).**

Der Erfindung liegt die Aufgabe zu Grunde, einen Dübel zur Befestigung von Rahmenelementen an Mauerwerk oder dergleichen zu schaffen, der sich einfach verwenden lässt und eine geringe Tendenz zur Verdrehung des Dübels auch bei großen Längen des Dübels aufweist.

Zur Lösung dieser Aufgabe schlägt die Erfindung einen Dübel mit den im Anspruch 1 genannten Merkmalen sowie eine Verwendung eines solchen Dübels zur Befestigung von Rahmenelementen an Mauerwerk vor. Weiterbildungen der Erfindung sind Gegenstand von Unteransprüchen.

Unter dem Ausgangszustand ist der Zustand des Dübels zu verstehen, wenn er fertig gestellt, aber noch nicht in ein Loch eingesetzt ist. Die Spreizelemente verlaufen mit ihren Innenseiten im wesentlichen bündig mit der Innenseite der Wand der Dübelhülse, stehen also allenfalls geringfügig nach innen vor, beispielsweise um maximal 20 % der Dicke der Wand der Dübelhülse, vorzugsweise um 10 %, insbesondere 5 %, bevorzugt 1 % oder überhaupt nicht.

Der Dübel wird also dadurch im Mauerwerk verankert, dass die Aufspreizelemente von der Schraube nach außen gedrückt werden. Die Dübelhülse an sich ist zylindrisch und wird nicht aufgespreizt. Die Dübelhülse hat im bevorzugten Fall einen kreisrunden Querschnitt, sowohl an der Außenseite als auch an der Innenseite. Es sind aber auch andere Querschnittsformen denkbar, beispielsweise eine elliptische Form, eine mehreckige Form insbesondere als Achteck. Die Wanddicke der Dübelhülse liegt zwischen 0, 5 und 3 mm, vorzugsweise im Bereich von etwa 1,5 mm.

Da die Innenseite der radial bewegbaren Aufspreizelemente im wesentlichen bündig mit der Innenseite der Wand der Dübelhülse verläuft, kann der Innenraum der Dübelhülse glattflächig ohne irgendwelche Strukturen mit Ausnahme der die Aufspreizelemente umgebenden Durchbrechungen ausgebildet sein.

Es wurde bereits erwähnt, dass der Dübel zur Durchsteckmontage bestimmt ist. Damit die Aufspreizelemente, die radial über die Außenseite der Dübelhülse überstehen, beim Einschieben in das Loch im Rahmen und später in das Loch im Mauerwerk nicht stören, werden sie durch diese Einschiebbewegung nach innen eingeklappt. Um dies zu erleichtern, kann erfindungsgemäß in Weiterbildung vorgesehen sein, dass die Aufspreizelemente in axialer Richtung angeschrägt verlaufen. Diese Schrägflächen können in beiden axialen Richtungen vorgesehen sein.

Die Schraube, die zum Festlegen des Rahmens mithilfe des Dübels an dem Mauerwerk dient, lässt beim Eindrehen in die Dübelhülse ein Drehmoment entstehen, das von der Dübelhülse aufgenommen wird und die Tendenz hat, die Dübelhülse zu verdrehen. Obwohl durch die Maßnahmen nach der Erfindung eine solche Tendenz des Mitdrehens der Dübelhülse schon stark verringert ist, schlägt die Erfindung in Weiterbildung vor, dass die Dübelhülse eine Verdrehsicherung aufweisen kann.

In Weiterbildung der Erfindung kann vorgesehen sein, dass die Aufspreizelemente an ihren radialen Außenseiten Verdrehsicherungen aufweisen. Dies kann bevorzugt an allen Aufspreizelementen vorgesehen sein, es ist aber nicht erforderlich, dass wirklich alle Aufspreizelemente eine solche Verdrehsicherung aufweisen.

Die Verdrehsicherung kann an der Dübelhülse als mindestens eine vorzugsweise über die gesamte Länge der Dübelhülse durchgehende schmale Rippe ausgebildet sein, insbesondere eine Rippe mit einem dreieckigen Querschnitt. Dadurch wird eine Kante gebildet, die ein Einschneiden oder Eingraben der Verdrehsicherung in dem Material ermöglicht.

Vorzugsweise sind zwei derartige Rippen an der Dübelhülse an zwei einander gegenüberliegenden Stellen des Umfangs angeordnet.

Auch die Aufspreizelemente können als Verdrehsicherung jeweils mindestens eine in Axialrichtung der Dübelhülse verlaufende Rippe, vorzugsweise mehrere derartige Rippen aufweisen.

Für die Bewegbarkeit der Aufspreizelemente ist vorgesehen, dass diese an einer Seite einstückig mit der Dübelhülse verbunden sind und um diese Verbindungsstelle heraus verschwenkt werden. Diese Verbindungsstelle verläuft dabei vorzugsweise in Axialrichtung der Dübelhülse.

Es eignen sich verschiedene Formen für die Aufspreizelemente, wobei hier die Form in einer Blickrichtung senkrecht zur Längsachse der Dübelhülse gemeint ist. Beispielsweise können die Aufspreizelemente als viereckige Lappen ausgebildet sein, die an einer Seite des Vierecks mit der Dübelhülse, wie bereits erwähnt, einstückig verbunden sind, während die drei anderen Seiten des Vierecks durch Schlitze von der Wand der Dübelhülse getrennt sind.

Als besonders sinnvoll hat es sich herausgestellt, dass die Aufspreizelemente Dreieckform aufweisen, wobei eine Seite quer zur Längsachse verläuft, also unter einem rechten Winkel gegenüber der die Anlegestelle bildenden Seite. Die dritte Seite eines solchen Dreiecks verläuft schräg zur Längsachse.

Insbesondere wird von der Erfindung vorgeschlagen, dass die Aufspreizelemente in einer Reihe angeordnet sind und die in axialer Richtung benachbarten Aufspreizelemente komplementär zueinander ausgebildet und angeordnet sind. Vorzugsweise sind zwei derartige Reihen von Aufspreizelementen bevorzugt an gegenüberliegenden Seiten vorhanden, die dann jeweils durch eine durchgehende Wand der Dübelhülse voneinander getrennt sind.

Der Dübel kann in das Dübelloch durch den Rahmen eingeschlagen werden, wobei dann nicht auf den Dübel geschlagen wird, sondern auf eine Schraube, die mit ihrem vorderen Ende in den hinteren Bereich der Dübelhülse eingesteckt ist. Damit ein Schlag auf die Schraube zum Einschieben der Dübelhülse führt, kann erfindungsgemäß in Weiterbildung vorgesehen sein, dass der Dübel an dem hinteren Ende der Dübelhülse eine Einschlagsicherung aufweist. Die Einschlagsicherung kann von einer Gewindewindung gebildet sein, wobei vorzugsweise in diesem Bereich der Dübel eine etwas größere Wandstärke aufweist als im weiteren Verlauf der Dübelhülse.

Erfindungsgemäß kann nach einem weiteren Merkmal vorgesehen sein, dass der Dübel im Bereich seines hinteren Endes einen radial nach außen ragenden Kragen aufweist, der einen Anschlag bildet, so dass der Dübel beim Einschlagen mit diesem Kragen an der Oberfläche des Mauerwerks anschlägt. Dieser Kragen kann dünn ausgebildet sein, da er mit Ausnahme des Anschlags keine weitere Funktion hat.

Erfindungsgemäß kann der Kragen geschlitzt ausgebildet sein, also mehrere durch Einschnitte voneinander getrennte Teile aufweisen.

Dübel zur Befestigung von Rahmen werden, wie bereits erwähnt, durch das Bohrloch des Rahmens in das Dübelloch des Mauerwerks eingeschoben. Um das Finden des Lochs zu erleichtern, kann erfindungsgemäß in Weiterbildung vorgesehen sein, dass die Dübelhülse im Bereich ihres vorderen beim Einschieben führenden Endes eine Spitze aufweist und/oder verjüngt ausgebildet ist.

Der von der Erfindung vorgeschlagene Dübel wird mit seiner Dübelhülse auf Maß produziert, während die Aufspreizelemente auf Übermaß produziert werden.

Ein Dübel der hierin beschriebenen Art kann in der Weise zum Befestigen von Rahmenelementen an Mauerwerk verwendet werden, dass er durch eine durchgehende Bohrung im Rahmen hindurch in das Bohrloch mit dem gleichen Durchmesser eingeschoben wird, wobei die Schraube nur soweit in die Dübelhülse eingesetzt ist, dass sie den Bereich, in dem die Aufspreizelemente vorhanden sind, noch nicht erreicht. Beim Einschieben bzw. Einschlagen werden die Aufspreizelemente an den Stellen, wo die Bohrungswand nahe an der Dübelhülse ist, in den Innenraum der Dübelhülse hinein verschwenkt. An den Stellen, wo beispielsweise in einem Hohlkammerstein ein Hohlraum ist, bleiben die Aufspreizelemente in ihrer ursprünglichen Lage, ragen also nicht in den Innenraum der Dübelhülse hinein.

Wenn der Dübel seine endgültige Position erreicht hat, wenn nämlich der Kragen an der Oberseite des Mauerwerks anliegt, ragen nur diejenigen Aufspreizelemente in den Innenraum der Dübelhülse hinein, die an der Außenseite einen Widerstand durch die Bohrungswand erfahren. Beim Einschrauben der Schraube erfährt diese nur an den Stellen einen Widerstand durch die eingeklappten Aufspreizelemente, an denen sie die Aufspreizelemente gegen die Bohrungswand andrücken kann. Dadurch verringert sich das Gegendrehmoment beim Einschrauben der Schraube und damit die Tendenz des Dübels, beim Einschrauben der Schraube mitzudrehen.

Die eigentliche Festlegung des Rahmenelements an dem Mauerwerk geschieht dann durch die Schraube selbst.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht eines Dübels nach der Erfindung;
- Figur 2: eine Seitenansicht des Dübels der Figur 1 aus einer um 90° versetzten Richtung;
- Figur 3: einen Längsschnitt durch den Dübel;
- Figur 4: in vergrößertem Maßstab eine der Figur 1 entsprechende Seitenansicht des äußeren Endes des Dübels;
- Figur 5: eine der Figur 4 entsprechende Darstellung des Dübels aus einer um 90° versetzten Richtung;
- Figur 6: einen Längsschnitt durch das äußere Ende des Dübels;
- Figur 7: eine Stirnansicht des Dübels von seinem vorderen, in den Figuren 1 bis 3 unteren Ende her;
- Figur 8: einen Querschnitt durch den Dübel;
- Figur 9: eine Stirnansicht des Dübels von oben in Figur 1 bis 3;
- Figur 10: das Zusammenwirken von Schraube und Dübel.

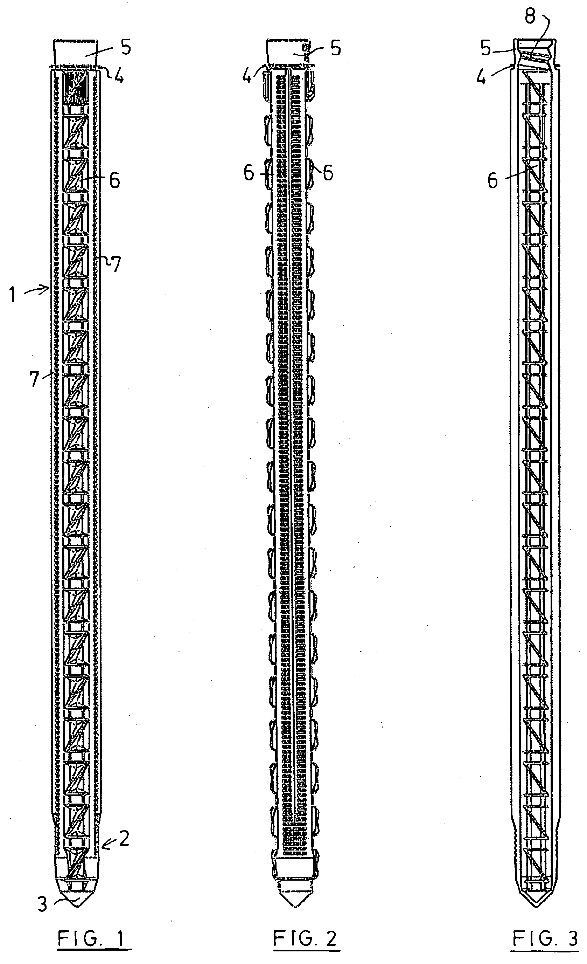

Die ersten drei Figuren zeigen den Dübel insgesamt. Der Dübel enthält eine Dübelhülse 1, die beispielsweise eine Länge von mindestens 10 cm, vorzugsweise auch länger, aufweist. An dem einen in den Figuren unteren Ende enthält die Dübelhülse 1 einen sich verjüngenden Bereich 2, der in einer Spitze 3 endet. An dem in den Figuren 1 bis 3 oberen Ende ist ein Kragen 4 ausgebildet, und oberhalb des Kragens 4 ein Ansatz 5, der eine Einschlagsicherung enthält. In der Figur 1 ist zu sehen, dass an der zu sehenden Längsseite eine Vielzahl von dreieckigen Aufspreizelementen 6 angeordnet ist. Diese Aufspreizelemente 6 sind in der Figur 2 deutlicher zu sehen, da die Figur 2 eine Seitenansicht des Dübels aus einer gegenüber Figur 1 um 90° versetzten Richtung darstellt.

Seitlich in Figur 1 ist jeweils eine Rippe 7 zu sehen, die über die gesamte Länge der Dübelhülse bis zu dem sich verjüngenden Bereich 2 hindurchgeht.

Der Längsschnitt der Figur 3 zeigt, wie die Aufspreizelemente 6 von innen aussehen. Man kann zumindest erkennen, dass die Innenseite der Aufspreizelemente 6 glatt ausgebildet ist. Oben in Figur 3 sieht man, dass in dem Ansatz 5 eine Gewindewindung 8 ausgebildet ist, die die erwähnte Einschlagsicherung bildet.

Die Figuren 1 bis 3 zeigen, wie bereits erwähnt, den Dübel in Gesamtansicht und sollen einen Überblick über den Dübel insgesamt geben. Die folgenden Figuren zeigen in größerem Maßstab Einzelheiten.

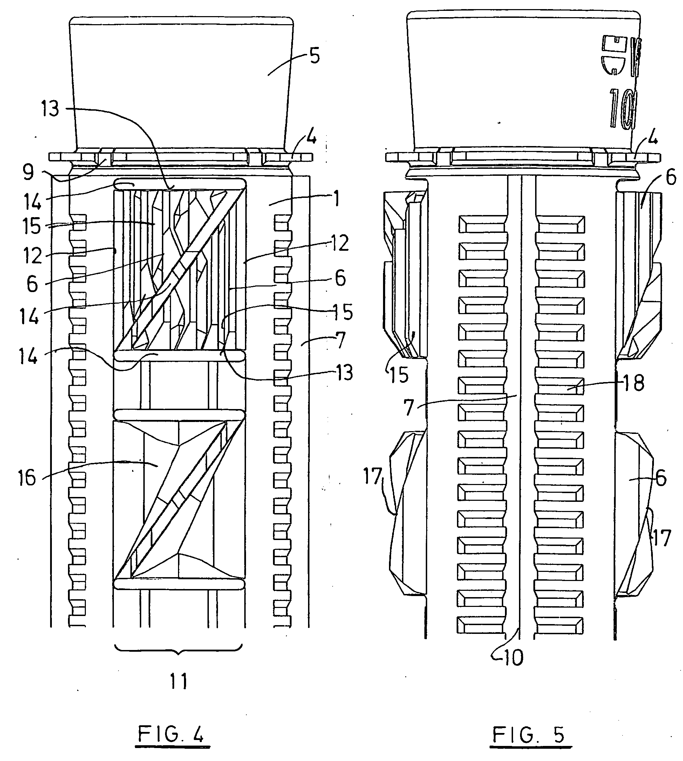

Zunächst zu der Darstellung in Figur 4, die den Dübel aus der gleichen Richtung zeigt wie die Figur 1. An dem hinteren Ende des Dübels ist der Ansatz 5 ausgebildet, durch den hindurch eine Schraube in den Dübel eingeführt wird. Der Ansatz 5 ist leicht konisch und erweitert sich zum freien Ende des Dübels. Der Ansatz 5 ist in montiertem Zustand innerhalb des Rahmens bzw. der Bohrung des Rahmens angeordnet. Auf den Ansatz 5 mit der Einschlagsicherung folgt der Kragen 4, der mehrere durch Einschnitte 9 unterbrochene Segmente aufweist. Auf der dem Ansatz 5 abgewandten Seite des Kragens 4 folgt dann die eigentliche Dübelhülse 1, die zylindrisch ausgebildet ist. Die Dübelhülse weist zwei in Längsrichtung verlaufende Rippen 7 auf, die jeweils eine glatte durchgehende Kante 10 bilden. Die Rippen 7 stehen über die äußere Oberfläche der Dübelhülse 1 vor. Sie bilden eine Verdrehsicherung.

Auf der in Figur 4 zu sehenden Seite der Dübelhülse sind die erwähnten Aufspreizelemente 6 angeordnet. Es sind jeweils zwei Aufspreizelemente 6 zu einem Paar zusammengefasst. Dadurch wird eine in Axialrichtung verlaufende Reihe 11 von Aufspreizelementen gebildet. Jedes Aufspreizelement 6 weist die Form eines Dreiecks auf, das mit einer seiner Seiten 12 mit der Dübelhülse 1 einstückig verbunden ist. Diese Seite verläuft in Längsrichtung der Dübelhülse. Jedes dreieckige Aufspreizelement 6 weist eine quer zur Längsrichtung verlaufende Kante 13 auf, wobei diese Kanten 13 abwechselnd in Richtung auf das hintere und das vordere Ende der Dübelhülse gerichtet sind. Die Aufspreizelemente 6 sind an zwei Seiten durch Schlitze voneinander und von der Dübelhülse getrennt. Die von oben aus gerechnet beiden ersten Aufspreizelemente 6 in Figur 4 haben auf ihrer sichtbaren Außenseite mehrere in Axialrichtung verlaufende Rippen 15, die durch Rillen voneinander getrennt sind. Diese Rippen bilden eine Verdrehsicherung.

Die beiden folgenden ebenfalls ein Paar bildenden Aufspreizelemente 6 sind glattflächig ausgebildet, haben aber ebenfalls schräg verlaufende Flächen, die durch eine Kante 16 voneinander getrennt sind. Die Größe diese Aufspreizelemente 6 entspricht der Größe der anderen Aufspreizelemente 6.

Nun zu der Darstellung der Figur 5. Hier ist das Dübelmaß eingezeichnet, dem die Dübelhülse folgt.

Aus der Figur 5 kann man entnehmen, dass die Aufspreizelemente radial aus der Dübelhülse 1 vorstehen, also nach außen herausragen. Man kann bei dem oberen Paar der Aufspreizelemente 6 die einzelnen Rippen 15 sehen. Bei dem unteren Paar von Aufspreizelementen 6 kann man die schräg verlaufenden Flächen 17 sehen, die bei jeweils einem Aufspreizelement 6 nach unten schräg verlaufen, während sie bei dem anderen Aufspreizelement 6 schräg nach oben verlaufen.

Auch bei den Rippen 15 des oberen Paares von Aufspreizelementen 6 sind die Enden der Rippen 15 schräg ausgebildet.

In der Mitte der Dübelhülse 1 der Figur 5 sieht man die eine Rippe 7 mit ihrer Kante 10. Beidseits dieser Rippe sind in der Außenseite der Dübelhülse quer verlaufende Kerben 18 eingeformt.

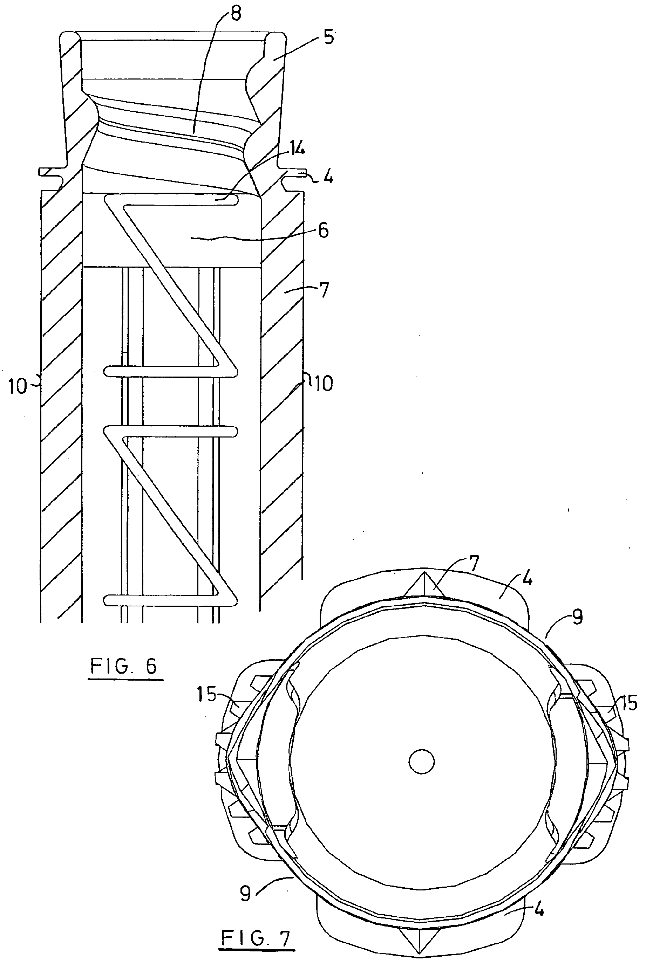

Aus der Figur 6 sieht man, dass die Innenseite der Aufspreizelemente 6 glatt ist. Die die Aufspreizelemente 6 voneinander und von der Dübelhülse 1 trennenden Schlitze 14 bilden ein Z.

Innerhalb des leicht konischen Ansatzes 5 ist eine Gewindewindung 8 ausgebildet, die mit dem Gewinde der Schraube zusammenwirkt, die den Dübel aufweitet.

Ebenfalls zu sehen ist, dass der Durchmesser des Kragens 4 dem Abstand der Kanten 10 der beiden Rippen 7 gleich ist.

Die folgende Figur 7 zeigt eine Stirnansicht des Dübels von der Spitze 3 her. Hier ist die gegenseitige Zuordnung zwischen den Rippen 7 der Dübelhülse 1 und den Paaren von Aufspreizelementen 6 zu erkennen. Die Paare von Aufspreizelementen 6 sind in Reihen angeordnet, die sich über einen Winkelbereich von etwa 30° über den Umfang erstrecken. Mittig zwischen diesen Reihen von Aufspreizelementen 6 sind die Rippen 7 der Verdrehsicherung ausgebildet. Die vier Segmente des Kragens 4 sind an den gleichen Stellen angeordnet, wo die Paare von Aufspreizelementen 6 einerseits und die Rippen 7 andererseits angeordnet sind.

Man kann der Figur 7 ähnlich wie der Figur 5 entnehmen, dass im noch nicht verwendeten Zustand die Aufspreizelemente radial über die Außenseite der Dübelhülse 1 vorstehen.

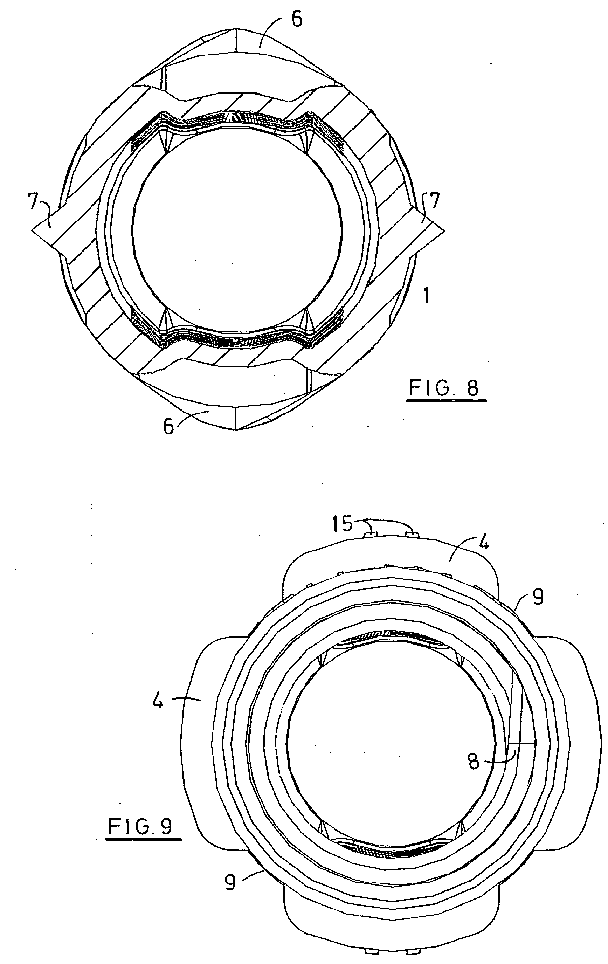

Die Figur 8 zeigt nun einen Querschnitt durch den Dübel, der ebenfalls zeigt, dass die Rippen 7 der Verdrehsicherung deutlich über den sonstigen Umfang der Dübelhülse 1 vorstehen. Auch das Vorspringen der Aufspreizelemente 6 ist hier zu sehen.

Die Figur 9 zeigt eine Stirnansicht des Dübels von der hinteren Seite her, also von oben in den Figuren 1 bis 6. Hier ist nochmals die Anordnung des Kragens 4 zu sehen, dessen Außenkante etwa genauso weit reicht wie die Außenkante der Rippen 15 der Aufspreizelemente, die gerade noch zu sehen sind.

Zum Einschlagen des Dübels wird eine Schraube, die etwa so lang ist wie der Dübel insgesamt, in den Ansatz 5 mit seiner Einschlagsicherung eingeschraubt. Sie wird gerade soweit eingeschraubt, dass sie bis etwa zu dem Kragen 4 reicht. Dann wird der Dübel in das gebohrte Loch gesteckt und vorwärts geschoben bzw. geschlagen. Dabei klappen die Aufspreizelemente 6 nach innen, was durch den leeren Innenraum ermöglicht wird. Dieses Einschlagen erfolgt solange, bis der Kragen 4 an der Außenseite des Mauerwerks zur Anlage kommt. Erst dann wird die Schraube eingeschraubt. Sie erfährt durch die Aufspreizelemente 6 nur dort einen Widerstand, wo die Aufspreizelemente ihrerseits an der Wand des Bohrlochs anliegen.

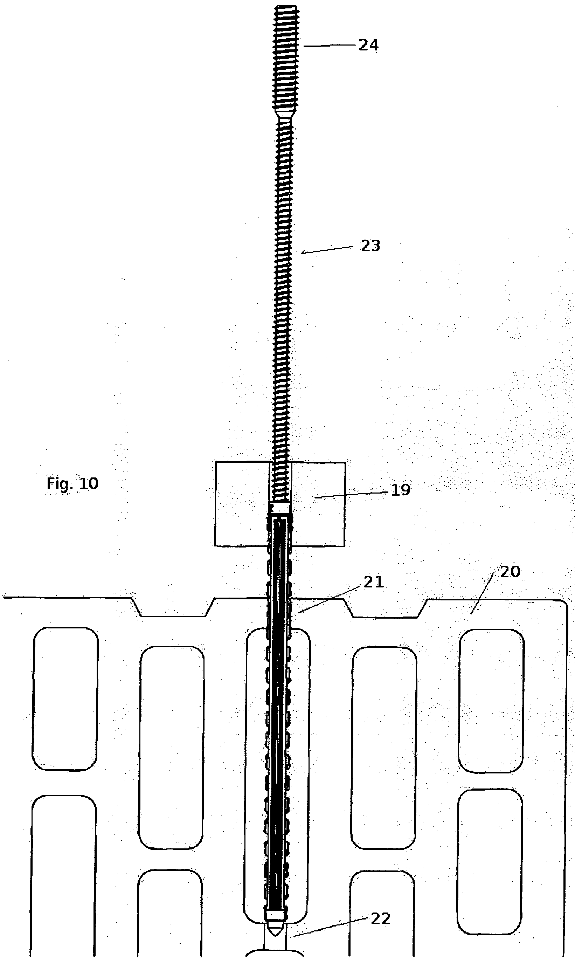

In der nun folgenden Figur 10 wird die Anwendung des Dübels schematisch dargestellt. Der Dübel dient dazu, ein Rahmenelement, beispielsweise einen Fensterrahmen 19, an einem Mauerwerk zu befestigen. Im dargestellten Beispiel wird das Mauerwerk von einem Hohlkammerstein 20 gebildet. Solche Hohlkammersteine enthalten, wie der Name schon sagt, Hohlräume, die durch Stege voneinander getrennt sind. Der Dübel muss so lang sein, dass er mindestens bis in einen zweiten Steg hineinreicht.

Der Dübel wird beim Einschlagen durch die miteinander fluchtenden Bohrungen des Fensterrahmens 19 und des ersten Stegs 21 bis in die Bohrung in dem zweiten Steg 22 geführt.

Erst nach dem vollständigen Einschlagen des Dübels, begrenzt durch den Kragen 7, wird die Schraube 23 eingeschraubt. Die Schraube hat einen Gewindeschaft mit einem dem Durchmesser des Dübels entsprechenden Durchmesser, an dem sich dann im hinteren Bereich ein Abschnitt 24 mit vergrößertem Durchmesser anschließt. Der Durchmesser dieses Abschnitts 24 mit vergrößertem Durchmesser entspricht dem Außendurchmesser des Dübels und damit dem Durchmesser des Bohrlochs in dem Fensterrahmen 19.

Beim Einschrauben der Schraube schneidet sich diese in den Aufspreizelementen innerhalb der Stege 21 und 22 ein Gewinde und presst die Aufspreizelemente gleichzeitig gegen die Wand des Bohrlochs in den beiden Stegen 21 und 22. Gegen Ende der Einschraubbewegung schraubt sich dann der Abschnitt 24 mit dem vergrößerten Durchmesser in das Bohrloch im Fensterrahmen 19, so dass dann im Endergebnis der Fensterrahmen 19 an dem Hohlkammerstein 20 festgelegt ist.

## Patentansprüche

1. Dübel, mit
1.1 einer **nicht aufweitbaren** Dübelhülse (1), die
1.2 einen sich in ihrer Längsrichtung erstreckenden Innenraum zur Aufnahme einer Schraube (23) aufweist, sowie mit 1.3 einer Vielzahl von Aufspreizelementen (6), die
1.4 mindestens teilweise radial bewegbar **um eine In Axialrichtung verlaufende Achse verschwenkbar** in jeweils einer Durchbrechung der Wand der Dübelhülse (1) angeordnet sind,
1.5 mindestens teilweise eine größere Wandstärke als die Dübelhülse (1) aufweisen und
1.6 im Ausgangszustand des Dübels mit ihren Innenseiten im wesentlichen bündig mit der Innenseite der Wand der Dübelhülse (1) verlaufen.

2. Dübel nach Anspruch 1, bei dem die Aufspreizelemente (6) in mindestens einer axialen Richtung angeschrägt sind.

3. Dübel nach Anspruch 1 oder 2, mit einer Verdrehsicherung an der Dübelhülse (1).

4. Dübel nach einem der vorhergehenden Ansprüche, bei dem mindestens einige, vorzugsweise alle Aufspreizelemente (6) eine Verdrehsicherung aufweisen.

5. Dübel nach Anspruch 3 oder 4, bei dem die Verdrehsicherung durch mindestens eine, vorzugsweise mehrere axiale Rippen (7, 15) gebildet ist.

6. Dübel nach einem der vorhergehenden Ansprüche, bei dem mindestens ein Aufspreizelement (6) in Seitenansicht des Dübels die Form eines Dreiecks aufweist, das an einer in Axialrichtung der Dübelhülse (1) verlaufenden Seite einstückig mit der Dübelhülse (1) verbunden ist.

7. Dübel nach Anspruch 6, bei dem zwei axial benachbarte Aufspreizelemente (6) komplementär zueinander angeordnet sind.

8. Dübel nach einem der vorhergehenden Ansprüche, mit einer an dem hinteren Ende der Dübelhülse (1) angeordneten Einschlagsicherung.

9. Dübel nach einem der vorhergehenden Ansprüche, mit einem im Bereich des hinteren Endes der Dübelhülse (1) ausgebildeten radial vorspringenden Kragen (4).

10. Dübel nach einem der vorhergehenden Ansprüche, bei dem die Dübelhülse im Bereich ihres vorderen Endes eine Spitze (3) aufweist und/oder verjüngt ausgebildet ist.

11. Verwendung eines Dübels nach einem der vorhergehenden Ansprüche zur Befestigung von Rahmenelementen an Mauerwerk, wobei der Dübel durch eine Bohrung in dem Rahmen hindurch in die Bohrung in dem Mauerwerk mithilfe einer Schraube eingeschlagen wird, die im Bereich ihres vorderen Endes in den Dübel eingesteckt ist.

12. Verwendung nach Anspruch 11, bei der der Dübel im wesentlichen vollständig in dem Mauerwerk angeordnet wird.

## Claims

1. A wall plug, with
1.1 a non-expandable wall plug sleeve (1), which
1.2 has an inner cavity extending in its longitudinal direction for purposes of accommodating a screw (23), together with
1.3 a multiplicity of spreader elements (6), which
1.4 are arranged in each case in an aperture of the wall of the wall plug sleeve (1) such that they can move radially at least in part, and can pivot about an axis running in the axial direction,
1.5. have a greater wall thickness than the wall plug sleeve (1), at least in part, and
1.6 in the initial state of the wall plug run with their inner faces essentially flush with the inner face of the wall of the wall plug sleeve (1).

2. The wall plug in accordance with claim 1,
in which the spreader elements (6) are chamfered in at least one axial direction.

3. The wall plug in accordance with claim 1 or 2,
with an anti-rotation device on the wall plug sleeve (1).

4. The wall plug in accordance with one of the preceding claims,
in which at least some, preferably all, spreader elements (6) have an anti-rotation device.

5. The wall plug in accordance with claim 3 or 4,
in which the anti-rotation device is formed by at least one, preferably a plurality, of axial ribs (7, 15).

6. The wall plug in accordance with one of the preceding claims,
in which in a side view of the wall plug, at least one spreader element (6) has the shape of a triangle, which on a side running in the axial direction of the wall plug sleeve (1) is integrally connected with the wall plug sleeve (1).

7. The wall plug in accordance with claim 6,
in which two axially adjacent spreader elements (6) are arranged in a complementary manner to one another.

8. The wall plug in accordance with one of the preceding claims,
with an anti-impaction device arranged at the rear end of the wall plug sleeve (1).

9. The wall plug in accordance with one of the preceding claims,
with a radially projecting collar (4) formed in the region of the rear end of the wall plug sleeve (1).

10. The wall plug in accordance with one of the preceding claims,
in which in the region of its front end the wall plug sleeve has a tip (3) and/or is designed in a tapered manner.

11. An application of a wall plug in accordance with one of the preceding claims,
for purposes of fastening frame elements onto masonry walls, wherein
the wall plug is driven through a hole in the frame into the hole in the masonry wall with the aid of a screw, which in the region of its front end is inserted into the wall plug.

12. The application in accordance with claim 11,
in which the wall plug is arranged essentially fully within the masonry wall.

## Revendications

1. Cheville, avec
1.1 une gaine de cheville (1) non extensible, qui
1.2 comporte un espace intérieur s'étendant dans sa direction longitudinale, destiné à recevoir une vis (23), ainsi qu'avec
1.3 une pluralité d'éléments d'expansion (6), qui
1.4 sont placés en étant au moins déplaçables en partie en direction radiale autour d'un axe s'écoulant en direction axiale chacun dans un jour de la paroi de la gaine de cheville (1),
1.5 présentent au moins en partie une épaisseur de paroi supérieure à la gaine de cheville (1) et
1.6 dans la position initiale de la cheville, s'écoulent sensiblement à fleur par leurs faces intérieures de la face intérieure de la paroi de la gaine de cheville (1).

2. Cheville selon la revendication 1, sur laquelle les éléments d'expansion (6) sont chanfreinés dans au moins une direction axiale.

3. Cheville selon la revendication 1 ou la revendication 2, avec une sécurité anti-rotation sur la gaine de cheville (1).

4. Cheville selon l'une quelconque des revendications précédentes, sur laquelle au moins quelques, de préférence tous les éléments d'expansion (6) comportent une sécurité anti-rotation.

5. Cheville selon la revendication 3 ou la revendication 4, sur laquelle la sécurité anti-rotation est formée par au moins une, de préférences plusieurs nervures (7, 15) axiales.

6. Cheville selon l'une quelconque des revendications précédentes, sur lesquelles, en vue latérale de la cheville, au moins un élément d'expansion (6) présente la forme d'un triangle, qui sur une face s'écoulant en direction axiale de la gaine de cheville (1) est relié en monobloc avec la gaine de cheville (1).

7. Cheville selon la revendication 6, sur laquelle deux éléments d'expansion (6) voisines en direction axiale sont placées en étant complémentaires l'un de l'autre.

8. Cheville selon l'une quelconque des revendications précédentes, avec un blocage anti-enfoncement placé sur l'extrémité arrière de la gaine de cheville (1).

9. Cheville selon l'une quelconque des revendications précédentes, avec une collerette (4) saillant en direction radiale, conçue dans la région de l'extrémité arrière de la gaine de cheville (1).

10. Cheville selon l'une quelconque des revendications précédentes, sur laquelle, dans la région de son extrémité avant, la gaine de cheville comporte une pointe (3) et/ou est conçue en se rétrécissant.

11. Utilisation d'une cheville selon l'une quelconque des revendications précédentes pour la fixation d'élément de cadres sur une maçonnerie, lors de laquelle on enfonce la cheville en frappant par un perçage à travers le cadre dans le perçage dans la maçonnerie à l'aide d'une vis qui dans la région de son extrémité avant est insérée dans la cheville.

12. Utilisation selon la revendication 11, lors de laquelle on place la cheville de façon sensiblement complète dans la maçonnerie.
